# EUROPÄISCHE PATENTSCHRIFT

(11) **EP 2 166 891 B1**
(45) Veröffentlichungstag und Bekanntmachung des Hinweises auf die Patenterteilung: **28.12.2011**
(21) Anmeldenummer: 08773713.6
(22) Anmeldetag: 27.06.2008
(51) Int. Cl.: A43B 13/18, A43B 17/14

(54) **SCHUH FÜR MEDIZINISCHE ANWENDUNGEN**
SHOE FOR MEDICAL APPLICATIONS
CHAUSSURE POUR APPLICATIONS MEDICALES

(30) Priorität: 12.07.2007 DE 102007032821
(43) Veröffentlichungstag der Anmeldung: 31.03.2010
(73) Patentinhaber: Nora Systems GmbH, 69469 Weinheim (DE)
(72) Erfinder: GRUN, Gregor, 69469 Weinheim (DE); HEINRICH, Ralf, 67365 Schwegenheim (DE); LIM, Desmond Kuan Chieh, Singapore 598751 (SG); SCHMIED, Benno, 67071 Ludwigshafen (DE); SCHMITT, Jürgen, 64653 Lorsch (DE); NIEBERGALL, Thomas, 55569 Nussbaum (DE)
(74) Vertreter: Reiser, Tonio Andreas
(86) Internationale Anmeldenummer: PCT/EP2008/005238
(87) Internationale Veröffentlichungsnummer: WO 2009/007016

(56) Entgegenhaltungen:
- WO-A-01/12005
- US-A- 5 325 869
- US-A1- 2001 049 890
- US-A1- 2007 011 920
- US-B1- 6 263 592

## Beschreibung

### Technisches Gebiet

Die Erfindung betrifft einen Schuh für medizinische Anwendungen sowie eine Innensohle für einen Schuh mit einem Permanentmagneten gemäβ dem gegenstand der Ansprüche 1 und 11.

### Stand der Technik

Insbesondere Diabetiker leiden unter Durchblutungsproblemen und sind besonders anfällig gegen Druckbelastungen. Die Druckbelastungen führen zu Druckstellen am Körper, die sich entzünden und zur Wundbildung führen können.

In den aus dem Stand der Technik bekannten Schuhen werden häufig Schaumstoffe eingesetzt. Diese Schaumstoffe verdichten sich im Laufe der Zeit und können dann nicht mehr ihre volle Federungs- und Polsterwirkung entfalten. Die Folge hiervon sind Bereiche in den Schuhen, die nicht mehr federn und abpolstern können. Hierdurch kann es zu Druckbelastungen an den Füßen des Trägers kommen.

Unter diesen Druckbelastungen leiden insbesondere Diabetiker, an deren Füßen sich rasch Wunden ausbilden.

Aus der US 5,325,869 ist eine Anordnung mit einem Permanentmagneten und einem Sensor zur Bestimmung des Körpergewichts einer Person bekannt. Dazu ist zwischen dem Magneten und dem Sensor ein deformierbares Element angeordnet, welches eine gewichtsbezogene Änderung des Abstands zwischen Magnet und Sensor hervorruft, welche durch den Sensor detektiert wird.

In der WO 01/12005 A1 ist eine flexible Lage aus magnetisiertem Material gezeigt, welche als Innensohle ausgebildet ist. Das durch das Material erzeugte Magnetfeld soll therapeutischen Zwecken dienen. Eine vergleichbare Ausgestaltung zeigt die US 6,263,592.

### Darstellung der Erfindung

Der Erfindung liegt daher die Aufgabe zu Grunde, einen Schuh zu realisieren, welcher seinem Träger Informationen über die Materialeigenschaften und den Zustand des Schuhs geben kann.

Erfindungsgemäß wird die voranstehende Aufgabe mit den Merkmalen der Patentansprüch 1 und 11 gelöst.

Zur Lösung der Aufgabe ist der Grundkörper des Permanentmagneten elastisch deformierbar und der Sensor bestimmt eine Änderung eines Magnetfeldes oder einer magnetischen Feldstärke, die sich durch Deformation des elastisch deformierbaren Grundkörpers ergibt.

Erfindungsgemäß ist erkannt worden, dass ein elastischer Permanentmagnet erlaubt, Signale zu erzeugen, die Aufschluss über den Deformierungszustand und die Elastizitätseigenschaften des Permanentmagneten liefern. Ganz konkret ist erkannt worden, dass ein elastischer Permanentmagnet so mit einem Sensor kombiniert wird, dass der Sensor dem Träger des Schuhs Auskunft darüber gibt, ob einzelne Bereiche des elastischen Permanentmagneten bzw. dessen Grundkörpers bereits sehr stark verdichtet sind. Solche verdichteten Bereiche können ihre Federungs- und Polsterwirkung nicht mehr entfalten und können zu Druckstellen an den Füßen des Trägers führen. Insbesondere Diabetiker können aufgrund der Diabeteserkrankung Schmerzen und durch Druckstellen entstehende Wunden nicht in ausreichendem Maße frühzeitig wahrnehmen. Durch den Sensor, der mit dem Permanentmagneten zusammenwirkt, können dem Träger des Schuhs, insbesondere dem Diabetiker, Warnsignale gegeben werden, dass der Schuh oder dessen Sohle ausgetauscht werden müssen. Dazu ist dem Grundkörper ein Sensor zugeordnet. Dabei ist konkret denkbar, dass ein würfel-, quaderförmiger oder zylindrischer Grundkörper an einer seiner Flächen einen Sensor aufweist. Wenn der Grundkörper als Sohle eines Schuhs ausgebildet ist, könnte dieser keilförmig ausgestaltet sein. Durch den Sensor kann die Änderung eines Magnetfelds bzw. die Änderung einer magnetischen Feldstärke bestimmt werden, die sich durch eine Deformierung des elastischen Grundkörpers ergibt. Als Sensor könnte ein Hall-Sensor verwendet werden. Hall-Sensoren zeichnen sich durch eine hohe Auflösung und Zuverlässigkeit aus. Folglich ist die eingangs genannte Aufgabe gelöst.

Die Verwendung eines elastischen Permanentmagnets zur Herstellung eines Schuhs für medizinische Anwendungen eröffnet die Fertigung besonders gesundheitsfördernder Schuhe.

Der Permanentmagnet könnte in der Sohle des Schuhs positioniert sein. Durch diese konkrete Ausgestaltung ist die Erneuerung eines Schuhs problemlos möglich. Wenn die Sohle abgelaufen oder derart verdichtet ist, dass sie keine Federungswirkung mehr entfalten kann, kann die Sohle ausgetauscht werden. Dabei kann das Obermaterial des Schuhs wieder verwendet werden.

Es ist auch denkbar, dass der elastische Permanentmagnet Bestandteil der Innensohle des Schuhs ist. Auch in diesem Fall könnte im Abnutzungsfall die Innensohle ausgetauscht und der Schuh weiter genutzt werden.

Der Permanentmagnet könnte im Fersenbereich und/oder im Ballenbereich des Schuhs positioniert sein. Der Fersenbereich und der Ballenbereich eines Fußes ist besonders starken Druckbelastungen unterworfen. Daher müssen der Fersenbereich und der Ballenbereich besonders gut gepolstert werden. Die Positionierung des Permanentmagneten im Fersenbereich und/oder im Ballenbereich erlaubt eine Überwachung der besonders kritischen Stellen eines Schuhs.

Der Grundkörper könnte aus einem Schaumstoff gefertigt sein, in welchem hartmagnetische Partikel verteilt sind. Die Verwendung eines Schaumstoffs ist besonders vorteilhaft, da ein Grundkörper aus Schaumstoff durch Druckbeaufschlagung problemlos elastisch und reversibel deformierbar ist.

Vor diesem Hintergrund ist es denkbar, als Schaumstoffe sowohl Elastomerschäume, als auch Schäume aus thermoplastischen Elastomeren oder eine Mischung aus beiden zu verwenden. Im Sinne dieser Anmeldung werden unter Elastomerschäumen geschäumte Kunststoffe verstanden, die ein gummielastisches Verhalten aufweisen. Dabei kann es sich um weitmaschig chemisch oder physikalisch vernetzte Polymere handeln, die sich unter ihrem Glaspunkt stahlelastisch verhalten und die bei Temperaturen oberhalb ihres Glaspunktes gummielastisch sind. Glastemperaturen von bevorzugt eingesetzten Elastomeren liegen bei 20°C und darunter. Bevorzugt verhalten sich die eingesetzten Elastomerschäume bis zu ihrer Schmelz- oder Zersetzungstemperatur gummielastisch.

Bevorzugt eingesetzte Elastomere sind SBR (Polystyrol-Butadien-Kautschuk), NBR (Nitril-Butadien-Kautschuk), EPM (Ethylen-Propylen-Kautschuk), EPDM (Ethylen-Propylen-Dien-Kautschuk), EVA (Ethylvinylacetat), CSM (Chlorsulfonyl-Polyethylen-Kautschuk), VSi (Silikon-Kautschuk) oder AEM (Ethylen-Acrylat-Kautschuk), welche sich gut in Formgebungsprozessen verarbeiten lassen.

Bevorzugt eingesetzte thermoplastische Elastomere sind thermoplastische Polyester, thermoplastische Polyamide, unvernetzte thermoplastische Polyolefine, teilvernetzte thermoplastische Polyolefine, thermoplastische Styrolpolymere und insbesondere thermoplastische Polyurethane. Diese Werkstoffe lassen sich gut in Schäumungsprozessen verarbeiten.

Die Schaumstoffe können beliebige Porengrößen aufweisen. Es können offenzellige oder geschlossenzellige Schäume eingesetzt werden. Bei offenzelligen Schäumen stehen zumindest ein Teil der einzelnen Poren miteinander in Kontakt. Bei geschlossenzelligen Schäumen liegen alle Poren voneinander isoliert in der Polymermatrix vor. Typische Porengrößen bewegen sich im Bereich von 10 µm bis 3 mm.

Durch die Verwendung hartmagnetischer Partikel wird vorteilhaft gewährleistet, dass ein Grundkörper nach einer Magnetisierung eine dauerhafte Magnetisierung beibehält. Ganz im Gegensatz zu weichmagnetischen Partikeln, die ihre Magnetisierung sehr leicht verlieren, behalten hartmagentische Partikel ihre Magnetisierung bei. Ganz konkret sind die Elementarmagnete dauerhaft ausgerichtet und bilden daher dauerhaft Nord- und Südpole aus.

Der Grundkörper könnte aus einem Schaumstoff aus Ethylvinylacetat bestehen. Ein Schaumstoff aus diesem Material hat sich als besonders geeignet erwiesen, um hartmagnetische Partikel in homogener Verteilung aufzunehmen. Des Weiteren lassen sich einzelne Schaumstofflagen aus Ethylvinylacetat besonders leicht durch Vulkanisation oder Verkleben miteinander verbinden.

Zur Ausbildung einer Sohle für einen Schuh könnten drei Schaumstofflagen unterschiedlicher Härte durch Vulkanisation oder Verkleben miteinander verbunden werden. Die dem Fußboden zugewandte Schaumstofflage könnte die härteste Schaumstofflage sein, um der Sohle eine ausreichende Stabilität zu geben.

Im Grundkörper könnten SrFeO-Partikel (Strontiumferritpartikel) verteilt sein. Dieses Material zeigt eine dauerhafte Magnetisierung und eignet sich daher besonders zur Fertigung eines Permanentmagneten.

Vor diesem Hintergrund ist auch denkbar, dass im Grundkörper NdFeB-Partikel (Neodymeisenborpartikel) verteilt sind. Die hartmagnetischen Partikel zeigen eine dauerhafte Magnetisierung, nachdem deren Elementarmagnete durch einen externen Permanentmagneten oder einen magnetischen Puls ausgerichtet wurden.

Die Partikel könnten einen mittleren Durchmesser von 10 nm bis 500 µm aufweisen. Partikel dieser Größe stören vorteilhafterweise nicht den Aufbau der Schaumstoffmatrix. Die Stege zwischen den Poren werden nahezu nicht in ihrer Stabilität beeinflusst.

Besonders bevorzugt könnten hartmagnetische Partikel mit einem mittleren Durchmesser von 0,5 bis 5 µm verwendet werden, da diese problemlos in einem schäumfähigen Material dispergiert werden können und im fertigen Schaum besonders homogen verteilt sind.

Wenn der Grundkörper als Sohle eines Schuhs ausgebildet ist, könnte der Sensor im Grundkörper eingebettet sein. Hierdurch wird der Sensor vor Umwelteinflüssen wirksam geschützt.

Vor diesem Hintergrund ist konkret denkbar, dass der mit einem Sensor ausgerüstete elastische Permanentmagnet als Drucksensor verwendet wird. Durch den Sensor können Spannungswerte ermittelt und ausgegeben werden, die mit einer Änderung des Magnetfelds des Permanentmagneten korrespondieren. Die Änderung des Magnetfelds wiederum kann mit einer Deformierung des Grundkörpers um eine bestimmte Wegstrecke korreliert sein. Soweit die Kompressiblität des Grundkörpers bekannt ist, kann dann aus einem Weg-Spannungs-Diagram auf die Kraft beziehungsweise den Druck rückgeschlossen werden, mit welchem der Grundkörper deformiert wurde.

Der hier beschriebene Permanentmagnet könnte durch ein Verfahren mit den folgenden Schritten hergestellt werden:
Erzeugen einer homogenen Mischung aus einem schäumungsfähigen Material und hartmagnetischen Partikeln, Aufschäumen des Materials, Erzeugen eines fertigen Schaums und Magnetisieren der hartmagnetischen Partikel durch einen externen Permanentmagneten oder einen magnetischen Puls.

Durch dieses Verfahren können Permanentmagnete aus Schaumstoff hergestellt werden, in welchen hartmagnetische Partikel homogen verteilt sind.

Alle Ausführungen in Bezug auf den Aufbau des Grundkörpers sowie die Sensoren gelten ebenfalls für den Aufbau der Innensohle bzw. Einlegesohle.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung eines bevorzugten Ausführungsbeispiels der Erfindung anhand der Zeichnung zu verweisen.

In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine schematische Ansicht eines Permanentmagneten in unbelastetem und durch Druckbeaufschlagung deformiertem Zustand,
- Fig. 2: ein Weg-Spannungs-Diagramm eines Drucksensors, welcher einen Permanentmagneten der hier beschriebenen Art umfasst,
- Fig. 3: einen Schuh in schematischer Ansicht, bei dem die Sohle als Permanentmagnet ausgestaltet ist, und
- Fig. 4: eine Innensohle, die aus zwei unterschiedlichen Schaumstofflagen gefertigt ist.

### Ausführung der Erfindung

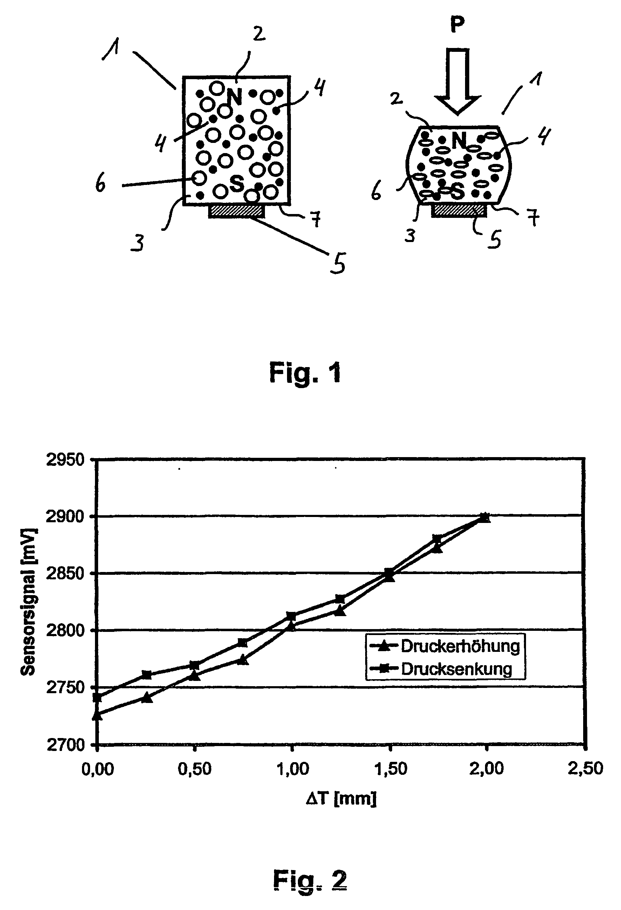

Fig. 1 zeigt einen Permanentmagneten, der einen zylindrischen Grundkörper 1 umfasst. Der Grundkörper 1 weist einen magnetischen Nordpol 2 und einen magnetischen Südpol 3 auf. Der Grundkörper 1 ist elastisch deformierbar. Dies ist schematisch in der rechten Abbildung in Fig. 1 gezeigt.

Der Grundkörper 1 ist aus einem Schaumstoff aus Ethylvinylacetat gefertigt, in welchem hartmagnetische Partikel 4 aus Strontiumferrit (SrFeO-Partikel) homogen verteilt sind. Diese Partikel weisen einen mittleren Durchmesser von 0,5 bis 5 µm auf. Die Strontiumferritpartikel 4 wurden durch einen externen Permanentmagneten oder einen magnetischen Puls derart magnetisiert, dass deren Elementarmagnete im Grundkörper 1 dauerhaft ausgerichtet sind. Der Permanentmagnet gemäß Fig. 1 zeigt daher eine dauerhafte Magnetisierung.

Der Grundkörper 1 ist aus einem Schaumstoff gefertigt, der Poren 6 aufweist, die sich im Bereich von 10 µm bis 3 mm bewegen.

An der kreisförmigen Grundfläche 7 des zylindrischen Grundkörpers 1 gemäß Fig. 1 ist ein Sensor 5 angeordnet. Der Sensor 5 ist als Hall-Sensor ausgestaltet. Der Sensor 5 und der Grundkörper 1 bilden in ihrer Gesamtheit einen Drucksensor, der zur Bestimmung von Drücken oder Wegstrecken ΔT verwendet werden kann.

In der linken Abbildung in Fig. 1 ist der Grundkörper 1 in unbelastetem Zustand gezeigt. Im unbelasteten Zustand bildet der Grundkörper 1 magnetische Feldlinien einer gewissen Dichte aus. Bei Druckbelastung des Grundkörpers 1 durch einen Druck (P) gemäß rechter Abbildung in Fig. 1 wird die Struktur der Feldlinien, insbesondere deren Dichte, verändert. Durch die Änderung der Feldlinien des Magnetfelds und damit dessen Feldstärke wird im Hall-Sensor 5 als Sensorsignal eine Spannung U erzeugt. Die Spannung U ist mit einer Wegstrecke ΔT korreliert, um die der Grundkörper 1 zusammengedrückt wurde.

Aus einer detektierten Spannung kann daher eine Wegstrecke ΔT ermittelt werden.

In Kenntnis der Kompressibilität des Schaumstoffs des Grundkörpers 1 und der Wegstrecke ΔT, um die der Grundkörper 1 von einer ersten Höhe auf eine zweite Höhe verbracht wurde, kann auf eine Druckkraft rückgeschlossen werden, die auf den Grundkörper 1 wirkt. Folglich kann der hier beschriebene elastische Permanentmagnet in einem Drucksensor verwendet werden.

Fig. 2 zeigt ein Weg-Spannungs-Diagramm, welches mit einem Hall-Sensor 5 des Typs Allegro A 1395 gemessen wurde. Der verwendete elastische Permanentmagnet weist einen Grundkörper 1 auf, der aus einem Schaumstoff aus Ethylvinylacetat gefertigt ist. Im Schaumstoff sind hartmagnetische Strontiumferritpartikel mit mittleren Durchmessern aus dem Bereich 0,5 µm bis 5 µm verteilt. Der zylindrische Grundkörper 1 weist eine Höhe von 4 mm auf, die Grundflächen einen Durchmesser von 6 mm. Die Pole 2, 3 sind den Grundflächen zugeordnet. In unbelastetem Zustand des Grundkörpers 1 herrscht eine magnetische Feldstärke von 5,5 mT (Millitesla).

Fig. 2 zeigt, dass eine Verpressung des Grundkörpers 1 um eine Wegstrecke ΔT, gemessen in mm, mit einem Sensorsignal, gemessen in mV, korreliert ist.

Es wurden sowohl die Sensorsignale gemessen, die sich bei zunehmender Belastung ergeben (Druckerhöhung), als auch die Sensorsignale, die sich bei abnehmender Belastung einstellen (Drucksenkung). Die vom Sensor 5 ausgegebene Spannung in mV ist proportional zur Wegstrecke ΔT, um die der Grundkörper 1 in axialer Richtung deformiert bzw. verpresst wird bzw. ist. Dabei ist jeder Spannungswert mit einem Deformierungszustand des Grundkörpers 1 korreliert. Durch Erfassen eines Spannungswerts kann daher auf den Grad der Deformierung oder Verpressung des Grundkörpers 1 geschlossen werden.

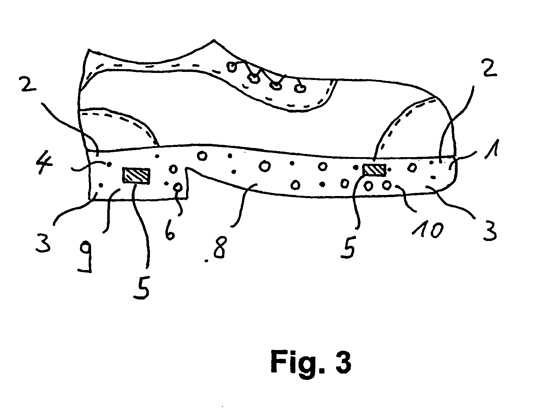

Fig. 3 zeigt einen Schuh, insbesondere für Diabetiker, mit einem Permanentmagneten, der einen Grundkörper 1 mit einem magnetischen Nordpol 2 und einem magnetischen Südpol 3 umfasst. Der Grundkörper 1 ist elastisch deformierbar. Der Permanentmagnet ist in der Sohle 8 positioniert. Ganz konkret ist der Grundkörper 1 als Sohle 8 ausgebildet. Der Permanentmagnet ist sowohl im Fersenbereich 9 als auch im Ballenbereich 10 positioniert.

Der Grundkörper 1 ist aus einem Schaumstoff aus Ethylvinylacetat gefertigt. Im Schaumstoff sind hartmagnetische Partikel 4 verteilt, die als Strontiumferritpartikel ausgestaltet sind. Diese Partikel 4 weisen einen mittleren Durchmesser von 0,5 bis 5 µm auf. Die Strontiumferritpartikel 4 wurden durch einen externen Permanentmagneten oder einen magnetischen Puls derart magnetisiert, dass deren Elementarmagnete im Grundkörper 1 dauerhaft ausgerichtet sind. Der Permanentmagnet gemäß Fig. 3 zeigt daher eine dauerhafte Magnetisierung. Der Grundkörper 1 ist aus einem Schaumstoff gefertigt, der Poren 6 aufweist. Der Durchmesser der Poren 6 bewegt sich im Bereich von 10 µm bis 3 mm.

Sowohl im Fersenbereich 9 als auch im Ballenbereich 10 ist jeweils ein Sensor 5 angeordnet. Die Sensoren 5 und der Grundkörper 1 bilden in ihrer Gesamtheit einen Drucksensor. Die Sensoren 5 können durch Bestimmung von Spannungswerten darüber Aufschluss geben, ob der Grundkörper 1 bereits derart verdichtet ist, dass er keine Federungswirkung mehr entfalten kann. Die von den Sensoren 5 gelieferten Spannungswerte geben dem Träger des Schuhs ein Signal, ob der Grundkörper 1 bzw. die Sohle 8 oder Teile der Sohle 8 aufgrund von Alterung oder Absetzprozessen bereits stark deformiert ist. Dabei entspricht jeder Spannungswert gemäß Fig. 2 einem Grad der Deformierung bzw. Verdichtung des Grundkörpers 1 bzw. der Sohle 8.

Die Sohle 8 könnte aus mehreren elastischen Schaumstofflagen aufgebaut sein, wobei zumindest eine der Schaumstofflagen den Grundkörper 1 des hier beschriebenen elastischen Permanentmagneten darstellt. Die Schaumstofflagen könnten durch Vulkanisation miteinander verbunden sein.

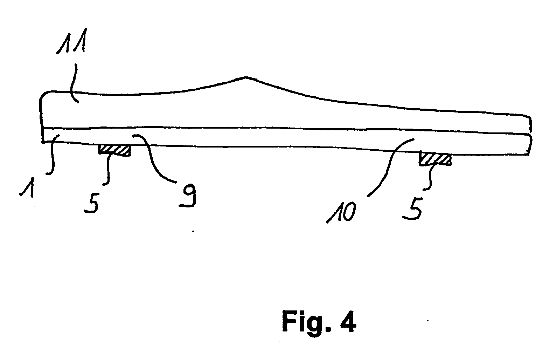

Fig. 4 zeigt eine Innensohle für einen Schuh, die aus zwei unterschiedlichen Schaumstofflagen 1 und 11 aufgebaut ist. Dabei entspricht die Schaumstofflage 1 in ihrem Aufbau dem zuvor beschriebenen Grundkörper 1 und ist als elastischer Permanentmagnet ausgestaltet. Im Fersenbereich 9 und im Ballenbereich 10 sind jeweils Hall-Sensoren 5 angebracht, mit deren Hilfe die Verformung der Schaumstofflagen 1 und 11 verfolgt werden kann.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Abschließend sei ganz besonders hervorgehoben, dass das zuvor rein willkürlich ausgewählte Ausführungsbeispiel lediglich zur Erörterung der erfindungsgemäßen Lehre dient, dieses jedoch nicht auf dieses Ausführungsbeispiel einschränkt.

## Patentansprüche

1. Schuh mit einem Permanentmagneten, wobei der Permanentmagnet einen Grundkörper (1) mit einem magnetischen Nordpol (2) und einem magnetischen Südpol (3) umfasst, wobei dem Grundkörper ein Sensor (5) zugeordnet ist, **dadurch gekennzeichnet, dass** der Grundkörper (1) des Permanentmagneten elastisch deformierbar ist und der Sensor (5) eine Änderung eines Magnetfeldes oder einer magnetischen Feldstärke bestimmt, die sich durch eine Deformierung des elastisch deformierbaren Grundkörpers (1) ergibt.

2. Schuh nach Anspruch 1, **dadurch gekennzeichnet, dass** der Permanentmagnet in der Sohle (8) positioniert ist.

3. Schuh nach Anspruch 1 oder 2, **dadurch gekennzeichnet, dass** der Permanentmagnet im Fersenbereich (9) und/ oder im Ballenbereich (10) positioniert ist.

4. Schuh nach einem der Ansprüche 1 bis 3, **dadurch gekennzeichnet, dass** der Grundkörper (1) aus einem Schaumstoff gefertigt ist, in welchem hartmagnetische Partikel (4) verteilt sind.

5. Schuh nach einem der Ansprüche 1 bis 4, **dadurch gekennzeichnet, dass** der Grundkörper (1) einen Schaumstoff aus Ethylvinylacetat aufweist.

6. Schuh nach einem der Ansprüche 1 bis 5, **dadurch gekennzeichnet, dass** der Grundkörper (1) ein Elastomer aus der Gruppe SBR (Polystyrol-Butadien-Kautschuk), NBR (Nitril-Butadien-Kautschuk), EPM (Ethylen-Propylen-Kautschuk), EPDM (Ethylen-Propylen-Dien-Kautschuk), EVA (Ethylvinylacetat), CSM (Chlorsulfonyl-Polyethylen-Kautschuk), VSi (Silikon-Kautschuk) oder AEM (Ethylen-Acrylat-Kautschuk) aufweist.

7. Schuh nach einem der Ansprüche 1 bis 6, **dadurch gekennzeichnet, dass** im Grundkörper (1) SrFeO - Partikel (4) verteilt sind.

8. Schuh nach einem der Ansprüche 1 bis 7, **dadurch gekennzeichnet, dass** im Grundkörper (1) NdFeB - Partikel (4) verteilt sind.

9. Schuh nach einem der Ansprüche 1 bis 8, **dadurch gekennzeichnet, dass** der Sensor (5) im Grundkörper (1) eingebettet ist.

10. Schuh nach einem der Ansprüche 1 bis 9, **dadurch gekennzeichnet, dass** durch den Sensor (5) dem Träger des Schuhs ein Signal gegeben wird, ob der Grundkörper (1) oder eine Sohle (8) oder Teile der Sohle (8) aufgrund von Alterung stark deformiert sind.

11. Innensohle mit einem Permanentmagneten, wobei der Permanentmagnet einen Grundkörper (1) mit einem magnetischen Nordpol (2) und einem magnetischen Südpol (3) umfasst und wobei dem Grundkörper ein Sensor (5) zugeordnet ist, **dadurch gekennzeichnet, dass** der Grundkörper (1) des Magneten elastisch deformierbar ist und der Sensor (5) eine Änderung eines Magnetfeldes oder einer magnetischen Feldstärke bestimmt, die sich durch eine Deformierung des elastisch deformierbaren Grundkörpers (1) ergibt.

## Claims

1. Shoe with a permanent magnet, the permanent magnet comprising a main body (1) with a magnetic North Pole (2) and a magnetic South Pole (3) and the main body being assigned a sensor (5), **characterized in that** the main body (1) of the permanent magnet is elastically deformable and the sensor (5) determines a change in a magnetic field or a magnetic field strength that is caused by a deformation of the elastically deformable main body (1).

2. Shoe according to Claim 1, **characterized in that** the permanent magnet is positioned in the sole (8).

3. Shoe according to Claim 1 or 2, **characterized in that** the permanent magnet is positioned in the heel region (9) and/or in the ball region (10)

4. Shoe according to one of Claims 1 to 3, **characterized in that** the main body (1) is produced from a foam material in which magnetically hard particles (4) are distributed.

5. Shoe according to one of Claims 1 to 4, **characterized in that** the main body (1) comprises a foam material of ethyl vinyl acetate.

6. Shoe according to one of Claims 1 to 5, **characterized in that** the main body (1) comprises an elastomer from the group SBR (polystyrene butadiene rubber), NBR (nitrile butadiene rubber), EPM (ethylene propylene rubber), EPDM (ethylene propylene diene rubber), EVA (ethylene vinyl acetate), CSM (chlorosulfonyl polyethylene rubber), VSi (silicone rubber) or AEM (ethylene acrylate rubber).

7. Shoe according to one of Claims 1 to 6, **characterized in that** SrFeO particles (4) are distributed in the main body (1).

8. Shoe according to one of Claims 1 to 7, **characterized in that** NdFeB particles (4) are distributed in the main body (1).

9. Shoe according to one of Claims 1 to 8, **characterized in that** the sensor (5) is embedded in the main body (1).

10. Shoe according to one of Claims 1 to 9, **characterized in that** the wearer of the shoe is given a signal by the sensor (5) as to whether the main body (1) or a sole (8) or parts of the sole (8) is/are greatly deformed as a result of ageing.

11. Insole with a permanent magnet, the permanent magnet comprising a main body (1) with a magnetic North Pole (2) and a magnetic South Pole (3) and the main body being assigned a sensor (5), **characterized in that** the main body (1) of the magnet is elastically deformable and the sensor (5) determines a change in a magnetic field or a magnetic field strength that is caused by a deformation of the elastically deformable main body (1).

## Revendications

1. Chaussure dotée d'un aimant permanent, ledit aimant permanent comprenant un corps de base (1) ayant un pôle nord magnétique (2) et un pôle sud magnétique (3), un capteur (5) étant associé audit corps de base, **caractérisée en ce que** le corps de base (1) dudit aimant permanent est susceptible de subir une déformation élastique et le capteur (5) déterminé une modification d'un champ magnétique ou d'une excitation magnétique résultant d'une déformation du corps de base (1) susceptible de subir une déformation élastique.

2. Chaussure selon la revendication 1, **caractérisée en ce que** ledit aimant permanent est positionné dans la semelle (8).

3. Chaussure selon la revendication 1 ou 2, **caractérisée en ce que** ledit aimant permanent est positionné au niveau du talon (9) et/ou au niveau de la partie antérieure de la plante du pied (10).

4. Chaussure selon l'une des revendications 1 à 3, **caractérisée en ce que** le corps de base (1) est réalisé en une mousse au sein de laquelle sont dispersées des particules (4) aux propriétés magnétiques dures.

5. Chaussure selon l'une des revendications 1 à 4, **caractérisée en ce que** le corps de base (1) comporte une mousse en acétate d'éthylvinyle.

6. Chaussure selon l'une des revendications 1 à 5, **caractérisée en ce que** le corps de base (1) comporte un élastomère issu du groupe des SBR (caoutchouc styrène-butadiène), NBR (caoutchouc nitrile-butadiène), EPM (caoutchouc éthylène-propylène), EPDM (caoutchouc éthylène-propylène-diène), EVA (éthylène-acétate de vinyle), CSM (caoutchouc polyéthylène chlorosulfoné), VSi (caoutchouc silicone) ou AEM (caoutchouc éthyléne-acrylate).

7. Chaussure selon l'une des revendications 1 à 6, **caractérisée en ce que** des particules de SrFeO (4) sont dispersées au sein du corps de base (1).

8. Chaussure selon l'une des revendications 1 à 7, **caractérisée en ce que** des particules de NdFeB (4) sont dispersées au sein du corps de base (1).

9. Chaussure selon l'une des revendications 1 à 8, **caractérisée en ce que** le capteur (5) est incorporé dans le corps de base (1).

10. Chaussure selon l'une des revendications 1 à 9, **caractérisée en ce que** le capteur (5) envoie un signal à la personne portant ladite chaussure, lui indiquant si le corps de base (1) ou une semelle (8) ou des parties de la semelle (8) ont subi une forte déformation attribuable à leur vieillissement.

11. Semelle intérieure dotée d'un aimant permanent, ledit aimant permanent comprenant un corps de base (1) ayant un pôle nord magnétique (2) et un pôle sud magnétique (3), un capteur (5) étant associé audit corps de base, **caractérisée en ce que** le corps de base (1) dudit aiment permanent est susceptible de subir une déformation élastique et le capteur (5) détermine une modification d'un champ magnétique ou d'une excitation magnétique résultant d'une déformation du corps de base (1) susceptible de subir une déformation élastique.
